(19) Europäisches Patentamt / European Patent Office / Office européen des brevets

(11) **EP 4 104 998 A1**

(12) **EUROPEAN PATENT APPLICATION**
published in accordance with Art. 153(4) EPC

(43) Date of publication:
**21.12.2022 Bulletin 2022/51**

(21) Application number: **21753087.2**

(22) Date of filing: **04.02.2021**

(51) International Patent Classification (IPC):
**B29C 45/00** (2006.01)  **C08L 33/10** (2006.01)
**C08L 75/06** (2006.01)

(52) Cooperative Patent Classification (CPC):
**B29C 45/00; B29C 45/78; C08L 33/10; C08L 75/06**

(86) International application number:
**PCT/JP2021/004171**

(87) International publication number:
**WO 2021/161898 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2020 JP 2020020642**

(71) Applicant: **Asahi Kasei Kabushiki Kaisha
Tokyo 1000006 (JP)**

(72) Inventor: **TSUJIMOTO Katsura
Tokyo 100-0006 (JP)**

(74) Representative: **D Young & Co LLP
120 Holborn
London EC1N 2DY (GB)**

(54) **THERMOPLASTIC RESIN COMPOSITION**

(57)    Provided is a thermoplastic resin composition exhibiting both high transmittance and low haze and having excellent transparency and excellent scratch resistance and toughness. The thermoplastic resin composition of the present disclosure contains 50 % to 99 % by mass of methacrylic resin (A) and 1 % to 50 % by mass of thermoplastic polyurethane (B), wherein the methacrylic resin (A) contains 80.0 % to 99.9 % by mass of methacrylate ester monomer unit, 0.1 % to 20.0 % by mass of vinyl monomer unit containing a vinyl monomer copolymerizable with a methacrylate ester monomer excluding maleic acid and maleic anhydride, and 0 % to 4.0 % by mass of maleic acid and/or maleic anhydride monomer unit, and the thermoplastic polyurethane (B) has a structural unit derived from polyester polyol and a structural unit derived from isocyanate having an alicyclic ring.

EP 4 104 998 A1

**Description**

TECHNICAL FIELD

This disclosure relates to a thermoplastic resin composition.

BACKGROUND

As a transparent resin, methacrylic resin is characterized by having higher light transmittance, weather resistance, and rigidity than other plastic transparent resins, and conventionally, it has been used in a wide range of applications such as vehicle members, lighting fixtures, building materials, signboards, nameplates, paintings, and windows of display devices. Among these, a methacrylic resin composition is often used as a design part for home appliances and office automation products and a design part for the interior and exterior of automobiles because of its excellent appearance. However, the methacrylic resin composition has problems of low toughness and being scratched on the surface when used outdoors, and its use is often restricted when used in a molded product with a mechanical part or in a distorted application, or when used outdoors.

JP 2003-183471 A (PTL 1) describes a method using a multilayer (meth) acrylic rubber polymer to improve the toughness. However, these compositions cause stress whitening. The stress whitening is haze that occurs when receiving a bending stress. Further, these compositions still have problems that the scratch resistance is not improved.

WO 2007/057242 (PTL 2) examines compounding with elastomer as another method for improving toughness and describes a transparent plastic mixture with low-temperature impact resistance containing thermoplastic (TPU) and poly (meth) acrylate with improved impact resistance. According to PTL 2, these plastic mixtures exhibit acceptable transparency as well as good impact resistance, high tensile modulus, and good weather resistance. The plastic mixture uses thermoplastic polyurethane having aliphatic bonds. PTL 2 describes that, under the listed test conditions, a transmittance of 83 % is achieved in the mixture of poly (meth) acrylate with improved impact resistance and thermoplastic polyurethane having aliphatic bonds, but a total light transmittance of 83 % is insufficient for a transparent material. Further, the transparency of a material is affected not only by the total light transmittance but also by the haze.

JP 2015-532345 A (PTL 3) describes a composition in which an aliphatic isocyanate with a specific structure exhibits both high transmittance and low haze, especially low haze and high transparency, to improve the insufficient transparency. However, the composition described in PTL 3 does not have sufficiently low haze, and there is room for improvement in using it as a transparent material.

CITATION LIST

Patent Literature

PTL 1: JP 2003-183471 A
PTL 2: WO 2007/057242
PTL 3: JP 2015-532345 A

SUMMARY

(Technical Problem)

It could thus be helpful to provide a thermoplastic resin composition exhibiting both high transmittance and low haze and having excellent transparency and excellent scratch resistance and toughness.

(Solution to Problem)

We thus provide the following.

[1] A thermoplastic resin composition, comprising 50 % to 99 % by mass of methacrylic resin (A) and 1 % to 50 % by mass of thermoplastic polyurethane (B), wherein the methacrylic resin (A) comprises 80.0 % to 99.9 % by mass of methacrylate ester monomer unit, 0.1 % to 20.0 % by mass of vinyl monomer unit containing a vinyl monomer copolymerizable with a methacrylate ester monomer excluding maleic acid and maleic anhydride, and 0 % to 4.0 % by mass of maleic acid and/or maleic anhydride monomer unit, and the thermoplastic polyurethane (B) has a structural unit derived from polyester polyol and a structural unit derived from isocyanate having an alicyclic ring.

[2] The thermoplastic resin composition according to [1], wherein the number of alicyclic rings in the structural unit derived from isocyanate having an alicyclic ring is one.

[3] The thermoplastic resin composition according to [1] or [2], wherein a weight average molecular weight of the methacrylic resin (A) measured by gel permeation column chromatography (GPC) is 50,000 to 250,000.

[4] The thermoplastic resin composition according to any one of [1] to [3], wherein the methacrylic resin (A) has an amount of unsaturated double bond end of 0.01 mol% or less.

[5] The thermoplastic resin composition according to any one of [1] to [4], wherein the vinyl monomer unit containing a vinyl monomer copolymerizable with a methacrylate ester monomer excluding maleic acid and maleic anhydride is an acrylate ester monomer unit.

[6] The thermoplastic resin composition according to any one of [1] to [5], wherein the methacrylic resin (A) contains 85 % to 99.9 % by mass of methacrylate ester monomer unit and 0.1 % to 15 % by mass of acrylate ester monomer unit.

[7] The thermoplastic resin composition according to any one of [1] to [6], wherein a mass ratio of structural unit derived from isocyanate having one alicyclic ring is 70 % by mass or more with respect to 100 % by mass of a total mass of structural unit derived from isocyanate contained in the thermoplastic polyurethane (B).

[8] A method of producing the thermoplastic resin composition according to any one of [1] to [7], wherein the methacrylic resin (A) and the thermoplastic polyurethane (B) are blended at a temperature in a range of 200 °C to 260 °C.

[9] A molded product, comprising the thermoplastic resin composition according to any one of [1] to [7].

[10] An injection-molded product, comprising the thermoplastic resin composition according to any one of [1] to [7].

[11] A method of producing an injection-molded product, wherein the thermoplastic composition according to any one of [1] to [7] is molded at a cylinder temperature of 200 °C to 260 °C.

(Advantageous Effect)

The thermoplastic resin composition of the present disclosure exhibits both high transmittance and low haze and has excellent transparency and excellent scratch resistance and toughness.

DETAILED DESCRIPTION

[Thermoplastic resin composition]

A thermoplastic resin composition of the present embodiment contains 50 % to 99 % by mass of methacrylic resin (A) and 1 % to 50 % by mass of thermoplastic polyurethane (B) with respect to 100 % by mass of the thermoplastic resin composition. The methacrylic resin (A) contains 80.0 % to 99.9 % by mass of methacrylate ester monomer unit, 0.1 % to 20.0 % by mass of vinyl monomer unit containing a vinyl monomer copolymerizable with a methacrylate ester monomer excluding maleic acid and maleic anhydride, and 0 % to 4.0 % by mass of maleic acid and/or maleic anhydride monomer unit. The thermoplastic polyurethane (B) has a structural unit derived from polyester polyol and a structural unit derived from isocyanate having an alicyclic ring. In the present specification, the total mass of all the components of the thermoplastic resin composition is 100 % by mass unless otherwise specified.

<Methacrylic resin (A)>

The methacrylic resin (A) contains at least one kind of methacrylic resin, and it may be one kind of methacrylic resin alone or a combination of two or more kinds of methacrylic resins.

It is required that the methacrylic resin (A) should contain 80.0 % to 99.9 % by mass of methacrylate ester monomer unit, 0.1 % to 20.0 % by mass of vinyl monomer unit containing a vinyl monomer copolymerizable with a methacrylate ester monomer excluding maleic acid and maleic anhydride, and 0 % to 4.0 % by mass of maleic acid and/or maleic anhydride monomer unit, with respect to 100 % by mass of the methacrylic resin.

When the content of the methacrylate ester monomer unit is 99.9 % by mass or less, it is possible to prevent the decomposition of the resin during molding and to effectively prevent the formation of methacrylate ester monomer that is a volatile component and molding defects called silver. When the methacrylate ester monomer unit is 80.0 % by mass or more, the heat resistance generally required for a molded product can be secured. With sufficient heat resistance, the rigidity can be ensured, and the strength generally required for a molded product can be secured.

Examples of the methacrylate ester monomer of the methacrylate ester monomer unit contained in the methacrylic resin (A) include but are not limited to butyl methacrylate, ethyl methacrylate, methyl methacrylate, propyl methacrylate, isopropyl methacrylate, cyclohexyl methacrylate, phenyl methacrylate, (2-ethylhexyl) methacrylate, (t-butylcyclohexyl) methacrylate, benzyl methacrylate, and (2,2,2-trifluoroethyl) methacrylate. Among these, methyl methacrylate and ethyl methacrylate are preferable from the viewpoint of availability and price.

The methacrylate ester monomer may be used alone or in combination of two or more.

The content of the methacrylate ester monomer unit is preferably 85.0 % to 99.9 % by mass, more preferably 85.0 % to 99.8 % by mass, still more preferably 85.0 % to 99.5 % by mass, further preferably 90.0 % to 99.5 % by mass, and even more preferably 93.0 % to 99.5 % by mass with respect to 100 % by mass of the methacrylic resin (A). From the viewpoint of achieving both a higher transmittance and a lower haze, the content is particularly preferably 95.5 % to 99.0 % by mass.

The vinyl monomer copolymerizable with a methacrylate ester monomer of the vinyl monomer unit contained in the methacrylic resin (A) is a vinyl monomer excluding maleic acid and maleic anhydride, and examples thereof include but are not limited to an acrylate ester monomer having one acrylate group such as methyl acrylate, ethyl acrylate, n-propyl acrylate, n-butyl acrylate, sec-butyl acrylate, and 2-ethylhexyl acrylate.

Examples thereof also include an acrylate ester monomer having two or more (meth) acrylate groups, including one in which ethylene glycol or hydroxyl groups at both ends of the oligomer have been esterified with acrylic acid or methacrylic acid such as ethylene glycol di (meth) acrylate, diethylene glycol di (meth) acrylate, triethylene glycol di (meth) acrylate, and tetraethylene glycol di (meth) acrylate; one in which hydroxyl groups of two alcohols have been esterified with acrylic acid or methacrylic acid such as neopentyl glycol di (meth) acrylate and di (meth) acrylate; and one in which a polyhydric alcohol derivative has been esterified with acrylic acid or methacrylic acid such as trimethylolpropane and pentaerythritol.

In particular, methyl acrylate, ethyl acrylate, and n-butyl acrylate are preferable, and methyl acrylate and ethyl acrylate are preferable because they are easily available.

The vinyl monomer copolymerizable with a methacrylate ester monomer (preferably acrylate ester monomer) may be used alone or in combination of two or more.

The content of the vinyl monomer unit containing the vinyl monomer copolymerizable with a methacrylate ester monomer (preferably the content of the acrylate ester monomer) needs to be 0.1 % to 20.0 % by mass, preferably 0.1 % to 15.0 % by mass, more preferably 0.2 % to 15.0 % by mass, and still more preferably 0.5 % to 7.0 % by mass with respect to 100 % by mass of the methacrylic resin (A). From the viewpoint of achieving both a higher transmittance and a lower haze, the content is particularly preferably 1.0 % to 6.5 % by mass. When the content is 0.1 % by mass or more, it is possible to prevent the decomposition of the methacrylic resin during molding and the deterioration due to the decomposition and yellowing of the thermoplastic polyurethane caused by radicals caused by the decomposition of the methacrylic resin, and it is possible to effectively prevent the occurrence of molding defects due to the yellowing of the thermoplastic resin composition and the formation of volatile components. Further, when the vinyl monomer unit is 20.0 % by mass or less, the heat resistance generally required for a molded product can be secured.

From the viewpoint of ensuring the fluidity during injection molding and maintaining the transparency, the content of the vinyl monomer unit is preferably, with respect to (100 % by mass of) the methacrylic resin (A), 0.4 % by mass or less especially when a monomer having two (meth) acrylate groups is used, 0.25 % by mass or less when a monomer having three (meth) acrylate groups is used, and 0.15 % by mass or less when a monomer having four or more (meth) acrylate groups is used.

Examples of the vinyl monomer copolymerizable with a methacrylate ester monomer excluding maleic acid and maleic anhydride, other than an acrylate ester monomer, include but are not limited to $\alpha,\beta$-unsaturated acids such as acrylic acid and methacrylic acid; unsaturated group-containing divalent carboxylic acids such as fumaric acid, itaconic acid and cinnamic acid and their alkyl esters; styrene-based monomers such as styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, and isopropenylbenzene ($\alpha$-methylstyrene); aromatic vinyl compounds such as 1-vinylnaphthalene, 2-vinylnaphthalene, 1,1-diphenylethylene, isopropenyltoluene, isopropenylethylbenzene, isopropenylpropylbenzene, isopropenylbutylbenzene, isopropenylpentylbenzene, isopropenylhexylbenzene, and isopropenyloctylbenzene; cyanized vinyl compounds such as acrylonitrile and methacrylonitrile; unsaturated carboxylic acid anhydrides such as itaconic anhydride; maleimide and N-substituted maleimides such as N-methylmaleimide, N-ethylmaleimide, N-phenylmaleimide, and N-cyclohexylmaleimide; amides such as acrylamide and methacrylamide; and polyfunctional monomers such as divinylbenzene.

The methacrylic resin (A) may optionally contain maleic acid and/or maleic anhydride monomer units.

Maleic acid and maleic anhydride can be copolymerized with a methacrylate ester monomer, but they cannot be used in an excessive amount from the viewpoint of preventing a tinge of yellow when made into a thermoplastic resin composition with thermoplastic polyurethane, preventing yellowing during molding and occurrence of silver, and maintaining good weather resistance. Therefore, the content of the maleic acid monomer unit and/or the maleic anhydride monomer unit is preferably 0 % to 4.0 % by mass, more preferably 3.0 % by mass or less, and still more preferably 2.0 % by mass or less with respect to 100 % by mass of the methacrylic resin (A).

In the methacrylic resin (A), a vinyl-based monomer other than the vinyl monomer exemplified above may be appropriately added and copolymerized for the purpose of improving properties such as heat resistance and moldability.

The acrylate ester monomer copolymerizable with a methacrylate ester monomer, and the vinyl-based monomer other than the acrylate ester monomer exemplified above may be used alone or in combination of two or more.

The total content mass ratio of the methacrylate ester monomer unit and the acrylate ester monomer unit in 100 % by mass of the methacrylic resin (A) is preferably 88 % by mass or more, more preferably 94 % by mass or more, and still more preferably 100 % by mass, from the viewpoint of obtaining a molded product with better transparency and haze properties.

The content of the methacrylic resin (A) in the thermoplastic resin composition of the present embodiment may be 50 % to 99 % by mass with respect to 100 % by mass of the thermoplastic resin composition. From the viewpoint of obtaining a molded product having excellent transparency and toughness, it is preferably 50 % to 95 % by mass, more preferably 55 % to 95 % by mass, and still more preferably 60 % to 90 % by mass. From the viewpoint of obtaining a molded product having excellent transparency, toughness and scratch resistance, it is even more preferably 66 % to 89 % by mass and particularly preferably 71 % to 88 % by mass.

(Weight average molecular weight)

The following describes the weight average molecular weight (Mw) of the methacrylic resin (A) contained in the methacrylic resin composition of the present embodiment.

The methacrylic resin (A) preferably has a weight average molecular weight (Mw) measured by gel permeation chromatography (GPC) of 50,000 to 250,000.

To obtain good mechanical strength and solvent resistance when preparing the thermoplastic resin composition, the lower limit of the weight average molecular weight (Mw) of the methacrylic resin (A) is preferably 50,000 or more, more preferably 70,000 or more, and still more preferably 85,000 or more.

Further, the upper limit of the weight average molecular weight (Mw) of the methacrylic resin (A) is preferably 250,000 or less, more preferably 230,000 or less, and still more preferably 190,000 or less, so that the methacrylic resin composition exhibits good fluidity.

When the weight average molecular weight (Mw) of the methacrylic resin (A) is in the range of 50,000 to 250,000, the fluidity, mechanical strength, and solvent resistance can be obtained in a balanced manner when preparing the thermoplastic resin composition, and good moldability is maintained.

(Molecular weight distribution)

The molecular weight distribution (Mw/Mn) of the methacrylic resin (A) contained in the methacrylic resin composition of the present embodiment is preferably 1.0 to 6.0, more preferably 1.0 to 5.5, and still more preferably 1.0 to 5.0. It is particularly preferably 1.01 to 1.96 from the viewpoint of further improving the moldability. When the molecular weight distribution (Mw/Mn) of the methacrylic resin (A) is 1.0 to 6.0, the physical properties expressed by the methacrylic resin (A) are stable.

As used herein, Mw represents the weight average molecular weight, and Mn represents the number average molecular weight.

The weight average molecular weight (Mw) and the number average molecular weight (Mn) of the methacrylic resin (A) can be measured by GPC, and specifically, it can be measured by the method described in the Examples section below.

Specifically, using a standard methacrylic resin whose monodisperse weight average molecular weight has been known and can be obtained with a reagent, and an analytical gel column in which the high molecular weight component is eluted first, a calibration curve is created with the elution time and the weight average molecular weight. Subsequently, based on the obtained calibration curve, the weight average molecular weight (Mw) and the number average molecular weight (Mn) of the methacrylic resin (A) to be measured can be obtained, and the molecular weight distribution (Mw/Mn) can be calculated with them. The number average molecular weight (Mn) is a simple average molecular weight for one molecule, and it is defined by the total weight of the system/the number of molecules in the system. The weight average molecular weight (Mw) is defined as an average molecular weight by weight fraction.

(Amount of unsaturated double bond end)

The amount of unsaturated double bond end of the methacrylic resin (A) is preferably 0.01 mol% or less, to effectively prevent the yellowing of the thermoplastic resin composition caused by the occurrence of decomposition or deterioration of the thermoplastic polyurethane (B) in the thermoplastic resin composition of the present embodiment because of the radicals caused by the decomposition of the methacrylic resin (A), and to effectively prevent monomer-derived molding defects caused by the decomposition of the thermoplastic resin composition. It is more preferably 0.009 mol% or less and still more preferably 0.008 mol% or less.

The amount of unsaturated double bond end can be controlled by controlling the polymerization temperature or using a chain transfer agent. Specifically, when producing the methacrylic resin (A) with a suspension polymerization method, the polymerization temperature is preferably 80 °C or lower, more preferably 75 °C or lower, and still more preferably 70 °C or lower, to reduce the amount of unsaturated double bond end. The polymerization temperature may be constant, but setting the polymerization temperature to 70 °C or lower at the initial stage of polymerization is also effective in reducing the amount of unsaturated double bond end. In a case with a polymerization initiator, it is produced preferably with 0.5 % by mass or less, more preferably with 0.3 % by mass or less, still more preferably with 0.25 % by mass or less, and particularly preferably with 0.23 % by mass or less of polymerization initiator, with respect to 100 % by mass of the methacrylic resin (A). When producing with a solution polymerization method, the polymerization temperature is preferably 185 °C or lower, more preferably 180 °C or lower, still more preferably 170 °C or lower, and particularly preferably 160 °C or lower. In a case with a polymerization initiator, it is produced preferably with 0.4 % by mass or less, more preferably with 0.2 % by mass or less, still more preferably with 0.15 % by mass or less, and particularly preferably with 0.1 % by mass or less of polymerization initiator, with respect to 100 % by mass of the methacrylic resin (A).

The amount of unsaturated double bond end can be measured with the method described in the Examples section below.

(Method of producing methacrylic resin (A))

The methacrylic resin (A) contained in the methacrylic resin composition of the present embodiment can be produced with a solution polymerization method, a bulk polymerization method, a cast polymerization method, or a suspension polymerization method, but the production method is not limited to these methods. Bulk polymerization, solution polymerization, and suspension polymerization methods are preferable.

The polymerization temperature may be appropriately selected depending on the polymerization method, but it is preferably 50 °C or higher and 185 °C or lower, more preferably 50 °C or higher and 180 °C or lower, and still more preferably 60 °C or higher and 170 °C or lower. By setting the polymerization temperature to 185 °C or lower, the amount of unsaturated double bond end can be reduced, and it is possible to effectively prevent yellowing and molding defects of the thermoplastic resin composition due to the deterioration of the thermoplastic polyurethane (B). Further, by setting the polymerization temperature to 50 °C or higher, a methacrylic resin can be produced with good productivity.

When producing the methacrylic resin (A), a polymerization initiator may be used. Examples of the polymerization initiator include but are not limited to, when performing radical polymerization, organic peroxides such as di-t-butyl peroxide, lauroyl peroxide, stearyl peroxide, benzoyl peroxide, t-butyl peroxy neodecanate, t-butyl peroxy pivalate, dilauroyl peroxide, dicumyl peroxide, t-butylperoxy-2-ethylhexanoate, 1,1-bis (t-butylperoxy)-3,3,5-trimethylcyclohexane, and 1,1-bis (t-butylperoxy) cyclohexane, and azo-based general radical polymerization initiators such as azobisisobutyronitrile, azobisisovaleronitrile, 1,1-azobis (1-cyclohexanecarbonitrile), 2,2'-azobis-4-methoxy-2,4-azobisisobutyronitrile, 2,2'-azobis-2,4-dimethylvaleronitrile, and 2,2'-azobis-2-methylbutyronitrile. These may be used alone or in combination of two or more. It is also acceptable to use a combination of these radical polymerization initiators and an appropriate reducing agent as a redox-based initiator.

These radical polymerization initiators and/or redox-based initiators are generally used in a range of 0 to 1 part by mass with respect to 100 parts by mass of the total amount of all the monomers used in the polymerization of the methacrylic resin (A). The amount can be appropriately selected in consideration of the temperature at which the polymerization is performed and the half-life of the polymerization initiator.

When a bulk polymerization method, a cast polymerization method, or a suspension polymerization method is selected as the polymerization method of the methacrylic resin (A), it is preferable to perform the polymerization using a peroxide-based polymerization initiator from the viewpoint of preventing the coloring of the methacrylic resin (A).

Examples of the peroxide-based polymerization initiator include but are not limited to lauroyl peroxide, decanoyl peroxide, and t-butylperoxy-2-ethylhexanoate, in which lauroyl peroxide is more preferable.

When the methacrylic resin (A) is polymerized with a solution polymerization method at high temperatures of 90 °C or higher, it is preferable to use, for example, a peroxide or azobis initiator that has a 10-hour half-life temperature of 80 °C or higher and is soluble in an organic solvent used as the polymerization initiator.

Examples of the peroxide or azobis initiator include but are not limited to 1,1-bis (t-butylperoxy)-3,3,5-trimethylcyclohexane, cyclohexane peroxide, 2,5-dimethyl-2,5-di (benzoylperoxy) hexane, 1,1-azobis (1-cyclohexanecarbonitrile), and 2-(carbamoylazo) isobutyronitrile.

When producing the methacrylic resin (A), the molecular weight of the methacrylic resin (A) may be controlled so that the effects of the present disclosure are not impaired. Examples of a method of controlling the molecular weight of the methacrylic resin (A) include but are not limited to methods of controlling the molecular weight by using a chain transfer agent such as alkyl mercaptans, dimethylacetamide, dimethylformamide, and triethylamine, and an initiator such as dithiocarbamates, triphenylmethylazobenzene, and tetraphenylethane derivatives. It is also possible to adjust the molecular weight by adjusting the amount of these additions.

From the viewpoint of handleability and stability, it is preferable to use alkyl mercaptans as the chain transfer agent. Examples of the alkyl mercaptans include but are not limited to n-butyl mercaptan, n-octyl mercaptan, n-dodecyl mercaptan, t-dodecyl mercaptan, n-tetradecyl mercaptan, n-octadecyl mercaptan, 2-ethylhexylthioglycolate, ethylene glycol dithioglycolate, trimethylolpropane tris (thioglycolate), and pentaerythritol tetrakis (thioglycolate).

These can be appropriately added depending on the target molecular weight of the methacrylic resin, but they are generally used in a range of 0.001 parts by mass to 5 parts by mass with respect to 100 parts by mass of the total amount of all the monomers used in the polymerization of the methacrylic resin.

Examples of other molecular weight controlling methods include a method of changing the polymerization method, a method of adjusting the amount of the polymerization initiator, the above-mentioned chain transfer agent and initiator and the like, and a method of changing various polymerization conditions such as the polymerization temperature.

These molecular weight controlling methods may be used alone or in combination of two or more.

<Thermoplastic polyurethane (B)>

In the present embodiment, the thermoplastic polyurethane (B) is contained in the thermoplastic resin composition. The thermoplastic polyurethane (B) contains a structural unit derived from polyester polyol and a structural unit derived from isocyanate having an alicyclic ring, where, to improve the transparency of the thermoplastic resin composition, the structural unit derived from isocyanate having one alicyclic ring is preferably 70 % by mass or more with all the structural units derived from isocyanate being 100 % by mass. With all the structural units derived from isocyanate being 100 % by mass, the structural unit derived from isocyanate having one alicyclic ring is more preferably 75 % by mass or more, still more preferably 80 % by mass or more, further preferably 90 % by mass or more, and particularly preferably 100 % by mass.

The thermoplastic polyurethane (B) contains at least one kind of thermoplastic polyurethane, and it may be one kind of thermoplastic polyurethane alone or a combination of two or more kinds of thermoplastic polyurethane.

The thermoplastic polyurethane is generally produced by reacting the following components: (a) isocyanate, (b) a compound reactive with isocyanate, and optionally, in the presence of at least one of (c) a catalyst and/or (d) a conventional aid and/or additive. The following components: (a) isocyanate and (b) a compound reactive with isocyanate are referred to as structural components. These structural components may be identified with a conventionally known method, and examples thereof include but are not limited to the method described in Journal of The Adhesion Society of Japan Vol. 40 No. 6 (2004).

From the viewpoint of the transparency (high total light transmittance and low haze) and scratch resistance of the thermoplastic resin composition, the (a) isocyanate is preferably isocyanate having an alicyclic ring in the structure, and more preferably isocyanate having an alicyclic ring without unsaturated carbon bond or aromatic ring. Specifically, 4,4-diisocyanatodicyclohexylmethane (H12MDI), 1,3-bisisocyanatomethylcyclohexane (XDI), and isophorone diisocyanate (IPDI) are preferable from the viewpoint of better scratch resistance and transparency, and 1,3-bisisocyanatomethylcyclohexane (XDI) and isophorone diisocyanate (IPDI) are more preferable. Note that the isocyanate is not limited to the above. The isocyanate may be isocyanate having 5 % by mass or less of a mixture or an additive in the isocyanate if the effects of the present disclosure are not impaired.

The number of alicyclic rings contained in the (a) isocyanate is preferably one to four, and one is more preferable for further improving the heat-resistant deformation properties, the transparency of the thermoplastic resin composition, and the yellowing resistance during thermal processing.

When a plurality of kinds of isocyanates having an alicyclic ring are contained in the (a) isocyanate, the number of alicyclic rings may be the number of alicyclic rings of the compound with the highest mole fraction among the compounds contained in the (a) isocyanate.

Examples of the (b) compound reactive with isocyanate include at least one kind of polyester polyol. Using the polyester polyol improves the transparency when preparing the thermoplastic resin composition. In the present disclosure, it is required that the structure of the thermoplastic polyurethane (B) should contain a structural unit derived from polyester polyol or a mixture of two or more kinds of polyester polyol. The polyester polyol includes polycarbonate diol.

The mass ratio of the structural unit derived from polyester polyol in 100 % by mass of the structural unit derived from polyol contained in the thermoplastic polyurethane (B) is preferably 80 % to 100 % by mass, more preferably 90 % to 100 % by mass, and still more preferably 95 % to 100 % by mass.

The mass ratio of the structural unit derived from polyether in 100 % by mass of the structural unit derived from polyol contained in the thermoplastic polyurethane (B) is preferably less than 5 % by mass, more preferably less than 2 % by mass, still more preferably less than 1 % by mass, and particularly preferably not contained.

Examples of the polyester polyol include polyester polyol produced from an organic dicarboxylic acid having 2 to 12 carbon atoms (preferably an aromatic dicarboxylic acid having 8 to 12 carbon atoms) and a polyhydric alcohol (preferably a diol having 2 to 12 carbon atoms, more preferably a diol having 2 to 6 carbon atoms).

The organic dicarboxylic acid is an isomer of succinic acid, glutaric acid, adipic acid, suberic acid, azelaic acid, sebacic acid, decandicarboxylic acid, maleic acid, fumaric acid, phthalic acid, isophthalic acid, terephthalic acid, and naphthalenedicarboxylic acid. The dicarboxylic acid is used either alone or as a mixture with other dicarboxylic acids. Instead of the free dicarboxylic acid, the corresponding dicarboxylic acid derivatives, such as a dicarboxylate ester of an alcohol having 1 to 4 carbon atoms, or a dicarboxylic acid anhydride can also be used.

The polyhydric alcohol is preferably diol. Examples of the diol include ethanediol, diethylene glycol, 1,2- and 1,3-propanediol, dipropylene glycol, 1,4-butanediol, 1,5-pentanediol, 1,6-hexanediol, 1,10-decanediol, glycerol, and trimethylolpropane. It is preferably ethylene glycol, 1,3-propanediol, methyl-1,3-propanediol, 1,4-butanediol, 3-methyl-1,5-pentanediol, or 1,6-hexanediol. The polyhydric alcohol may be a polyester diol produced from lactone (e.g., $\varepsilon$-caprolactone), or a hydroxycarboxylic acid (e.g.,$\omega$-hydroxycarboxylic acid, hydroxybenzoic acid).

During the production of the polyester polyol, the reaction conditions of the organic dicarboxylic acid and polyalcohol may be selected according to a method such that the produced polyester polyol has no free acid group. The actual number of functional groups of the produced polyester polyol is preferably 1.9 to 2.1 and more preferably 2.0.

During the production of the polyester polyol, a mixture of organic dicarboxylic acid and polyalcohol may be subjected to condensation polymerization in the presence or absence of a catalyst, where a reaction in the presence of a catalyst is preferable, and a reaction in the presence of an esterification catalyst is more preferable.

Further, during the production of the polyester polyol, a mixture of organic dicarboxylic acid and polyalcohol may be subjected to condensation polymerization in the atmosphere of an inert gas (e.g., nitrogen, carbon monoxide, helium, or argon).

The temperature during the condensation polymerization of the organic dicarboxylic acid and the polyalcohol is preferably 150 °C to 250 °C and more preferably 180 °C to 220 °C. The condensation polymerization can be performed under arbitrarily reduced pressure.

The condensation polymerization usually continues until reaching a desired acid value (e.g., an acid value less than 10, preferably an acid value less than 2).

The molar ratio of the organic dicarboxylic acid to the polyalcohol used for the condensation polymerization is preferably 1: 1 to 1.8 and more preferably 1: 1.05 to 1.2.

In particular, the thermoplastic polyurethane (B) preferably contains a structural unit derived from polyester polyol produced from $\varepsilon$-caprolactone, and/or a structural unit derived from a condensation product of adipic acid or sebacic acid, and at least one kind of polyhydric alcohol selected from the group consisting of ethylene glycol, 1,3-propanediol, methyl-1,3-propanediol, 1,4-butanediol, 3-methyl-1,5-pentanediol, and 1,6-hexanediol

The number average molecular weight Mn of the polyester polyol used is preferably 500 to 4,000, more preferably 650 to 3,500, and still more preferably 800 to 3,000.

The number average molecular weight Mn can be measured with the GPC method.

Examples of the (b) compound reactive with isocyanate include polyhydric alcohols in addition to polyester polyol. Among the polyhydric alcohols, it is preferably at least one kind of polyhydric alcohol selected from the group consisting of ethylene-1,2-diol, 1,2-propanediol, 1,3-propanediol, 1,4-butanediol, 2,3-butanediol, 1,5-pentanediol, 1,6-hexanediol, diethylene glycol, dipropylene glycol, 1,4-cyclohexanediol, 1,4-dimethanolcyclohexane, and neopentyl glycol. It is more preferably a polyhydric alcohol selected from the group consisting of ethylene-1,2-diol, 1,3-propanediol, 1,4-butanediol, and 1,6-hexanediol. The polyhydric alcohol acts as a chain extender.

In the thermoplastic resin composition of the present embodiment, it is preferable that a structural unit derived from at least one kind of polyhydric alcohol selected from the group consisting of ethylene-1,2-diol, 1,3-propanediol, 1,4-butanediol, and 1,6-hexanediol be contained in the thermoplastic polyurethane (B) as polyol.

The (c) catalyst is preferably a (c) catalyst that accelerates the reaction between the NCO group of the (a) isocyanate and the hydroxy group of the (b) compound reactive with isocyanate. Examples of the (c) catalyst include tertiary amines, and triethylamine, dimethylcyclohexylamine, N-methylmorpholine, N,N'-dimethylpiperazine, 2-(dimethylaminoethoxy) ethanol, or diazabicyclo [2.2.2] octane is preferable. Further, the (c) catalyst is preferably an organometallic compound (e.g., dialkyltin salts (preferably dibutyltin diacetate and dibutyltin dilaurate) of titanate esters, iron compounds (preferably iron (III) acetylacetonate), tin compounds (preferably tin diacetate, tin dioctoate, and tin dilaurate) or aliphatic carboxylic acids, and bismuth salts in which bismuth is present in an oxidation state of preferably 2 or 3, especially 3).

The (c) catalyst is preferably a salt of a carboxylic acid. The carboxylic acid is preferably a carboxylic acid having 6 to 14 hydrocarbons, and particularly preferably a carboxylic acid having 8 to 12 hydrocarbons. The salt of a carboxylic acid is preferably a bismuth salt, and examples of a suitable bismuth salt include bismuth (III) neodecanoate, bismuth 2-ethylhexanoate, and bismuth octanoate.

The (c) catalyst used in the production of the thermoplastic polyurethane (B) is preferably a tin catalyst and particularly preferably tin dioctoate, where the mass ratio is preferably 0.0001 parts by mass to 0.1 parts by mass with respect to 100 parts by mass of the (b) compound reactive with isocyanate. When a tertiary amine is used as the (c) catalyst, the content of the tertiary amine in 100 % by mass of the thermoplastic resin composition of the present embodiment is preferably 0.9 % by mass or less, more preferably 0.5 % by mass or less, still more preferably 0.1 % by mass or less, and particularly preferably 0 % by mass, from the viewpoint of preventing the tertiary amine from being incorporated into the structural skeleton of the thermoplastic polyurethane (B) and preventing the yellowing during the molding process of the thermoplastic resin composition. Further, the content of the tertiary amine contained in 100 % by mass of the thermoplastic polyurethane (B) is preferably 0.9 % by mass or less, more preferably 0.5 % by mass or less, still more preferably 0.1 % by mass or less, and particularly preferably 0 % by mass, from the viewpoint of preventing the yellowing during the molding process.

In the production of the thermoplastic polyurethane (B), the ratio of the structural components (a) and (b) is such that the equivalent ratio of the NCO group of the (a) isocyanate to the total hydroxy group of the structural component (b) is preferably 0.9 to 1.1: 1, more preferably 0.95 to 1.05: 1, and still more preferably 0.96 to 1.0: 1. The production of the thermoplastic polyurethane (B) is preferably reacted in the presence of the (c) catalyst, and optionally (d) an aid and/or additive.

The content of the thermoplastic polyurethane (B) in the thermoplastic resin composition of the present embodiment is 1 % to 50 % by mass with respect to 100 % by mass of the thermoplastic resin composition. From the viewpoint of obtaining a molded product having good toughness and transparency, it is preferably 5 % to 50 % by mass, more preferably 5 % to 45 % by mass, and still more preferably 10 % to 40 % by mass. From the viewpoint of obtaining a molded product having good toughness, transparency and scratch resistance, it is further preferably 11 % to 34 % by mass and particularly preferably 12 % to 29 % by mass.

The total content of the methacrylic resin (A) and the thermoplastic polyurethane (B) in the thermoplastic resin composition of the present embodiment is preferably 80 % by mass or more, more preferably 90 % by mass or more, and still more preferably 100 % by mass with respect to 100 % by mass of the thermoplastic resin composition.

<Other components>

The thermoplastic resin composition of the present embodiment may contain components other than the above-described methacrylic resin (A) and thermoplastic polyurethane (B) if the effects of the present disclosure are not impaired. Other conventionally known resins may be mixed as the other components.

The other resins are not particularly limited, and known curable resins and thermoplastic resins may be suitably used.

Examples of the thermoplastic resin include but are not limited to polypropylene-based resin, polyethylene-based resin, polystyrene-based resin, syndiotactic polystyrene-based resin, ABS-based resin, methacrylic resin, AS-based resin, BAAS-based resin, MBS resin, AAS resin, biodegradable resin, polycarbonate-ABS resin alloy, polyalkylene arylate-based resin such as polybutylene terephthalate, polyethylene terephthalate, polypropylene terephthalate, polytrimethylene terephthalate, and polyethylene naphthalate, polyamide-based resin, polyphenylene ether-based resin, polyphenylene sulfide-based resin, and phenol-based resin.

In particular, AS resin and BAAS resin are preferable because they improve the fluidity, ABS resin and MBS resin are preferable because they improve the impact resistance, and polyester resin is preferable because it improves the chemical resistance.

Polyphenylene ether-based resin, polyphenylene sulfide-based resin, phenol-based resin and the like have an effect of improving the flame retardance.

Examples of the curable resin include but are not limited to unsaturated polyester resin, vinyl ester resin, diallyl phthalate resin, epoxy resin, cyanate resin, xylene resin, triazine resin, urea resin, melamine resin, benzoguanamine resin, urethane resin, oxetane resin, ketone resin, alkyd resin, furan resin, styryl pyridine resin, silicone resin, and synthetic rubber.

These resins may be used alone or in combination of two or more.

To obtain various predetermined properties such as rigidity and dimensional stability, the thermoplastic resin composition of the present embodiment may be added with various additives other than the methacrylic resin (A) and the thermoplastic polyurethane (B) if the effects of the present disclosure are not impaired.

Examples of the additives include but are not limited to plasticizers such as phthalate ester-based, fatty acid ester-based, trimellitate ester-based, phosphate ester-based, and polyester-based ones; release agents such as higher fatty acid, higher fatty acid ester, and higher fatty acid mono, di, or triglyceride-based ones; antistatic agents such as polyether-based, polyether ester-based, polyether ester amide-based ones, alkyl sulphonate, and alkylbenzene sulphonate; stabilizers such as phosphine-based stabilizer and light stabilizer; flame retardants; flame retardant aids; curing agents; curing accelerators; conductive agents; stress relieving agents; crystallization accelerators; dye; hydrolysis inhibitors; lubricants; ultraviolet absorbers; antioxidants; impact resistance imparting agents; sliding property improving agents; compatibilizers; nucleating agents; toughening agent; reinforcing agents; flow adjusting agents; sensitizers; coloring pigment; rubber polymer; thickeners; anti-settling agents; anti-sagging agents; filler; defoamers; coupling agents; corrosion inhibitors; antibacterial/antifungal agents; stain-proofing agents; conductive polymer; and carbon black.

An impact resistance imparting agent such as acrylic rubber multilayer polymer is particularly preferable.

In the thermoplastic resin composition for obtaining a molded product made of thermoplastic resin composition of the present embodiment, the content of the other components is preferably 0 % to 40 % by mass, more preferably 0.01 % to 30 % by mass, and still more preferably 0.02 % to 25 % by mass with respect to 100 % by mass of the thermoplastic resin composition, to maintain the transparency of the thermoplastic resin composition and to prevent molding defects such as bleed-out. By containing the other components in the above ranges, the function of each material can be exhibited.

The content of the impact resistance imparting agent is preferably 3 % to 50 % by mass, more preferably 5 % to 20 % by mass, and still more preferably 5 % to 9 % by mass with respect to 100 % by mass of the thermoplastic resin composition, to ensure the transparency while effectively imparting the impact resistance

The thermoplastic resin composition of the present embodiment preferably has a total light transmittance of 89 % or more, more preferably 90 % or more, and still more preferably 91 % or more when used as a flat plate sample.

The total light transmittance can be adjusted by, for example, setting the mass ratio of the methacrylic resin (A) and the thermoplastic polyurethane (B) within the above-mentioned suitable ranges, or using the above-mentioned suitable examples as the methacrylic resin (A).

The total light transmittance can be measured with the method described in the Examples section below.

The thermoplastic resin composition of the present embodiment preferably has a haze of 10 % or less, more preferably 9 % or less, still more preferably 8 % or less, and particularly preferably 3.5 % or less when used as a flat plate sample.

The haze can be adjusted by, for example, setting the mass ratio of the methacrylic resin (A) and the thermoplastic polyurethane (B) within the above-mentioned suitable ranges, or using the above-mentioned suitable examples as the methacrylic resin (A).

The haze can be measured with the method described in the Examples section below.

<Method of producing thermoplastic resin composition>

The thermoplastic resin composition can be obtained by mixing and kneading the methacrylic resin (A), the thermoplastic polyurethane (B), and if necessary, the various additives and other resins described above.

For example, it can be produced by kneading the materials using a kneader such as an extruder, a heating roller, a kneader, a roller mixer, and a Banbury mixer.

Kneading with an extruder is particularly preferable from the viewpoint of productivity.

The kneading temperature (that is, the temperature at which the methacrylic resin (A) and the thermoplastic polyurethane (B) are blended) is preferably 170 °C or higher, more preferably 180 °C or higher, and still more preferably 200 °C or higher, from the viewpoint of productivity. Further, from the viewpoint of preventing the deterioration of the methacrylic resin (A) and the thermoplastic polyurethane (B) and preventing the volatilization of various additives, the temperature is preferably 290 °C or lower, more preferably 280 °C or lower, and still more preferably 260 °C or lower. The kneading temperature in the present embodiment refers to the set temperature at the center of a cylinder when using an extruder.

<Molded product>

A molded product of the present embodiment contains the above-described thermoplastic resin composition of the present embodiment. The molded product may be an injection-molded product.

<Method of producing molded product>

The molded product of the present embodiment can be produced with a known molding method. Examples of the known molding method include but are not limited to injection molding, extrusion molding, blow (hollow) molding, vacuum molding, compression molding, calendar molding, and inflation molding. Molding by injection molding is particularly preferable from the viewpoint of productivity.

From the viewpoint of productivity, the molding temperature is preferably 170 °C or higher, more preferably 190 °C or higher, and still more preferably 200 °C or higher. Further, from the viewpoint of preventing the deterioration of the methacrylic resin (A) and the thermoplastic polyurethane (B) and preventing the volatilization of various additives, the temperature is preferably 290 °C or lower, more preferably 280 °C or lower, and still more preferably 260 °C or lower.

From the viewpoint of productivity, the cylinder temperature during the molding is preferably 170 °C or higher, more preferably 190 °C or higher, and still more preferably 200 °C or higher. Further, from the viewpoint of preventing the deterioration of the methacrylic resin (A) and the thermoplastic polyurethane (B) and preventing the volatilization of various additives, the temperature is preferably 290 °C or lower, more preferably 280 °C or lower, and still more preferably 260 °C or lower.

EP 4 104 998 A1

<Application of molded product>

A molded product containing the thermoplastic resin composition of the present embodiment has good weather resistance, scratch resistance and transparency, and it is possible to provide a resin molded product having excellent long-term stability in an outdoor environment exposed to ultraviolet rays. Therefore, it can be suitably used, for example, for a vinyl house film, a liquid crystal protective film, a building member, a vehicle member, an electric/electronic member, and a lighting member. Specifically, the molded product of the present embodiment can be used, for example, as a roofing material used for buildings, automobiles, trains or buses, a protective material used for lighting, signboards and meters, a vehicle lighting member, a ship lighting member, and a battery protective cover. It is particularly preferable to use the molded product as a vehicle member or a vehicle lighting member.

Other embodiments of the present disclosure can be found in the Claims and Examples sections. The above-described features of the product, the production method, and the method of use according to the present disclosure and the features described below can, of course, be used not only in each described combination but also in other combinations within the scope of the present disclosure. Therefore, for example, the present disclosure also implicitly includes a combination of preferred features and particularly preferred features, or a combination of features that are not well characterized and particularly preferred features, even if the combination is not explicitly described.

EXAMPLES

The following describes examples of the present disclosure, but this is not a limitation of the present disclosure. In particular, the present disclosure also includes embodiments resulting from combinations thereof.

[Raw materials used in Examples and Comparative Examples]

<Raw material of methacrylic resin (A)>

The raw materials of the methacrylic resin (A) used to produce the thermoplastic resin composition are as follows.

- Methyl methacrylate (MMA): manufactured by Asahi Kasei Corp. (in which 2.5 mass ppm of 2,4-dimethyl-6-t-butylphenol manufactured by CBC Group is added as a polymerization inhibitor.)

- Methyl acrylate (MA): manufactured by Mitsubishi Chemical Corporation (in which 14 mass ppm of 4-methoxyphenol manufactured by Kawaguchi Chemical Industry Co.,Ltd. is added as a polymerization inhibitor)

- Ethyl acrylate (EA): manufactured by Mitsubishi Chemical Corporation

- Maleic anhydride (MAH): manufactured by NIPPON SHOKUBAI CO., LTD.

- n-octyl mercaptan: manufactured by Arkema S.A.

- Lauroyl peroxide: manufactured by NOF CORPORATION

- Perhexa 22: manufactured by NOF CORPORATION

- Meta-xylene: manufactured by Tokyo Chemical Industry Co., Ltd.

- Tricalcium phosphate: manufactured by NIPPON CHEMICAL INDUSTRIAL CO.,LTD., used as a suspending agent

- Calcium carbonate: manufactured by Shiraishi Kogyo Kaisha, Ltd., used as a suspending agent

- Sodium lauryl sulfate: manufactured by Wako Pure Chemical Industries, Ltd., used as a suspending aid

<Thermoplastic polyurethane (B)>

- Elastollan NY5685N00A: manufactured by FCI, polyurethane 1

- Elastollan XCT-A1095: manufactured by FCI, polyurethane 2

- Elastollan NY1385V3-10HB: manufactured by FCI, polyurethane 3

- Elastollan HD595A10: manufactured by FCI, polyurethane 4

Table 1

|  | Polyurethane 1 | Polyurethane 2 | Polyurethane 3 | Polyurethane 4 |
|---|---|---|---|---|
| Polyol | Polyester polyol | Polyester polyol | Polyether | Polyester polyol |
| Isocyanate | Isocyanate having an alicyclic ring | Isocyanate having an alicyclic ring | Isocyanate having an alicyclic ring | Aliphatic isocyanate |
| Number of alicyclic rings contained in isocyanate | 2 | 1 | 2 | 0 |
| Mass ratio of structural unit derived from isocyanate having one alicyclic ring (in 100% by mass of the total mass of structural unit derived from isocyanate) | No structural unit derived from isocyanate having one alicyclic ring contained | 90% by mass or more | No structural unit derived from isocyanate having one alicyclic ring contained | No structural unit derived from isocyanate having one alicyclic ring contained |

<Additive>

- Kane Ace M-210: manufactured by KANEKA CORPORATION, acrylic rubber impact resistance improver.

- Tinuvin P: manufactured by BASF, melting point 128 °C

- Stearyl alcohol: manufactured by Kao Corporation, KALCOL 8098

[Measurement and evaluation methods]

<I. Molecular weight measurement of methacrylic resin (A)>

The weight average molecular weight (Mw) and molecular weight distribution (Mw/Mn) (Mn is a number average molecular weight) of the methacrylic resin (A) were measured with the following devices and under the following conditions.

- Measurement device: Gel Permeation Chromatography (HLC-8320GPC) manufactured by Tosoh Corporation
- Measurement condition:

    Column: one TSK guard column Super H-H, two TSK gel Super HM-M, and one TSK gel Super H2500 were connected in series in the stated order and used. In this column, high molecular weight components elute quickly, and low molecular weight components elute slowly.
    Detector: RI (differential refractometer) detector
    Detection sensitivity: 3.0 mV/min
    Column temperature: 40 °C
    Sample: 20 mL of tetrahydrofuran solution with 0.02 g of methacrylic resin
    Injection amount: 10 µL
    Developing solvent: tetrahydrofuran, flow rate: 0.6 mL/min, and 0.1 g/L of 2,6-di-t-butyl-4-methylphenol (BHT) was add as the internal standard.

The following ten kinds of polymethyl methacrylate having known monodisperse peak molecular weights and different molecular weights (manufactured by Polymer Laboratories; PMMA Calibration Kit M-M-10) were used as standard samples for the calibration curve.

Since the polymethyl methacrylate of the standard samples used for the standard samples for the calibration curve each have a single peak, the peak corresponding to each is expressed as the weight peak molecular weight Mp. In this respect, it was distinguished from the peak top molecular weight calculated when there were multiple peaks for one sample.

|  | Weight peak molecular weight (Mp) |
|---|---|
| Standard sample 1 | 1,916,000 |
| Standard sample 2 | 625,500 |
| Standard sample 3 | 298,900 |
| Standard sample 4 | 138,600 |
| Standard sample 5 | 60,150 |
| Standard sample 6 | 27,600 |
| Standard sample 7 | 10,290 |
| Standard sample 8 | 5,000 |
| Standard sample 9 | 2,810 |
| Standard material 10 | 850 |

Under the above conditions, the RI detection intensity of the methacrylic resin (A) with respect to the elution time was measured.

Based on the area in the GPC elution curve and the calibration curve of the cubic approximate expression, the weight average molecular weight (Mw) and the molecular weight distribution (Mw/Mn) of the methacrylic resin (A) were determined.

<II. Analysis of methacrylic resin (A) structural unit>

The structural unit was identified by $^1$H-NMR measurement, and its abundance (mass%) was calculated.

The measurement conditions for the $^1$H-NMR measurement are as follows.

Device: JEOL-ECA500
Solvent: $CDCl_3$-$d_1$ (deuterated chloroform)
Sample: 1 g of the methacrylic resin (A) was dissolved in 10 ml of acetone, 20 ml of methanol was added dropwise, and the mixture was filtered. Next, 15 mg of insoluble matters that had been vacuum-dried at 40 °C for 15 hours were dissolved in 0.75 mL of $CDCl_3$-$d_1$ to obtain a sample for measurement.

<III. Amount of unsaturated double bond end of methacrylic resin (A)>

The structural unit was identified by $^1$H-NMR measurement, and its abundance (mol%) in the methacrylic resin (A) was calculated.

The amount of unsaturated double bond end was calculated from the integral value of unsaturated double bond end peak (5.4 ppm to 5.6 ppm) and the peak integral value (3.6 ppm) of the methyl group bonded to the oxygen atom of the ester group of the methacrylic resin (A).

The measurement conditions for the $^1$H-NMR measurement are as follows.

Device: JEOL-ECA500
Scanning: 5000 times
Measurement temperature: room temperature
Observation nucleus: 1H (500MHz)
Solvent: $CDCl_3$-$d_1$ (deuterated chloroform)

Sample: 1 g of the methacrylic resin (A) was dissolved in 10 ml of chloroform, and 20 ml of methanol was added dropwise, and the mixture was filtered. The insoluble matters after filtration were dissolved again in 10 ml of chloroform, 20 ml of methanol was added dropwise, and the mixture was filtered, where the operation was repeated twice. Next, 75 mg of the final remaining insoluble matters that had been vacuum-dried at 40 °C for 15 hours were dissolved in 0.75 mL

of CDCl$_3$-d$_1$ to obtain a sample for measurement. If the insoluble matters after the final filtration were less than 75 mg, the operation was repeated until 75 mg was obtained.

<Measurement of total light transmittance>

The total light transmittance of the flat plate sample with a thickness of 2 mm obtained with the method described below was measured using NDH7000 manufactured by NIPPON DENSHOKU INDUSTRIES CO., LTD. according to JIS K7361. When the total light transmittance was 91 % or more, it was evaluated as "especially excellent"; when the total light transmittance was 90 % or more, it was evaluated as "good"; when the total light transmittance was 89 % or more, it was evaluated as "acceptable" (no problem in practice); and when the total light transmittance was less than 89 %, it was evaluated as "poor".

<Measurement of haze and measurement of scratch resistance>

A flat plate sample with a thickness of 2 mm obtained with the method described below and a white slide glass No. 001 manufactured by Matsunami Glass Ind.,Ltd. for reference were installed vertically from the ground so that they did not move. On the other hand, 22 g of Quarzsand F36 manufactured by Quarzwerke GmbH, 512 g of water, and a stirrer were put into a spray gun with a nozzle diameter of 1.3 mm. The mixture was stirred at a rate of 1000 rpm with a magnetic stirrer, and at the same time, the flat plate sample and the reference glass were installed so that the Quarzsand F36 would be sprayed on the reference glass and the flat plate sample in the same manner under conditions of an injection pressure of 0.3 MPa, a flow rate of 0.24 L/min, and a distance of 19 cm between the nozzle opening and the sample.

The haze before and after the test was measured according to JIS K7136 using NDH7000 manufactured by NIPPON DENSHOKU INDUSTRIES CO., LTD., and the change was determined to evaluate the scratch resistance. The haze was measured at the center of a test site where the Quarzsand F36 was sprayed. When the haze of the reference glass reached 3, the test ended. If the haze of the reference glass did not reach 3 in one test, the test was performed again under the same conditions.

When the change in haze was 7 % or less, the scratch resistance was evaluated as "good"; and when the change in haze was more than 7 %, the scratch resistance was evaluated as "poor". The change in haze was calculated according to the following formula.

$$(\text{Change in haze } (\%)) = (\text{Haze after test } (\%)) - (\text{Haze before test } (\%))$$

The haze of the flat plate sample with a thickness of 2mm obtained with the method described below before the test was taken as the haze of the thermoplastic resin composition. When the haze value was 3 % or less, the haze properties were evaluated as "especially excellent"; when the haze value was more than 3 % and 8 % or less, the haze properties were evaluated as "excellent"; when the haze value was more than 8 % and 10 % or less, the haze properties were evaluated as "acceptable" (no problem in practice); and when the haze value was more than 10 %, the haze properties were evaluated as "poor".

<Evaluation of injection moldability>

A flat plate sample with a thickness of 2 mm was prepared with the method described below and visually confirmed. When the appearance of the flat plate sample was defective or the pellets significantly yellowed, it was evaluated as "defective" (there is a problem with injection moldability). Those with no appearance defects were evaluated as "good". Based on the evaluation result, it is possible to determine whether or not injection molding is suitable when the thermoplastic resin composition of the present embodiment is subjected to thermal processing.

<Evaluation of toughness>

An ISO dumbbell test piece, which was obtained in the "ISO dumbbell test piece" described below, was subjected to a tensile test in accordance with ISO527-1. An autograph AGS-5kNX manufactured by Shimadzu Corporation was used in the test. With the distance between marked lines being 50 mm, tensile fracture strain or tensile fracture-causing strain was measured 5 times, the results were averaged, and the average value was used as an indicator of toughness. When the tensile fracture strain or tensile fracture-causing strain was 9 % or more, it was evaluated as "excellent". When the tensile fracture strain or tensile fracture-causing strain was less than 9 %, it was evaluated as "poor".

<Evaluation of yellowing resistance>

Pellets of the thermoplastic resin composition were charged into an injection molding machine (EC-100SX manufactured by Toshiba Machine Co., Ltd.) in which the temperature at the center of a cylinder was set to 220 °C and the mold temperature was set to 50 °C. Six 100 mm square flat plates with a thickness of 2 mm were molded and discarded, the yellow index of each of the seventh plate to the eleventh plate was measured, and the results are averaged to obtain an average value YI1. At this time, the molding cycle was set to 65 seconds. Next, the pellets were charged into an injection molding machine (EC-100SX manufactured by Toshiba Machine Co., Ltd.) in which the temperature at the center of a cylinder was set to 250 °C and the mold temperature was set to 50 °C. Six 100 mm square flat plates with a thickness of 2 mm were molded and discarded, the yellow index of each of the seventh plate to the eleventh plate was measured, and the results are averaged to obtain an average value YI2. At this time, the molding cycle was set to 65 seconds.

$\Delta$YI was obtained from YI2 - YI1, and it was used as an indicator of thermal stability. The yellowing resistance was evaluated according to the criteria of $\Delta$YI $\leq$ 0.5: excellent, 0.5 < $\Delta$YI < 1.5: good, 1.5 $\leq$ $\Delta$YI $\leq$ 2.0: acceptable (sufficient thermal stability in practice), and $\Delta$YI < 2.0: poor. Based on the evaluation result, the difference in yellowness under different molding temperature conditions is understood, and it is possible to evaluate the degree of freedom in setting molding conditions when the thermoplastic resin composition of the present embodiment is subjected to thermal processing.

For the measurement of yellow index, a color-difference meter TC-8600A manufactured by TokyoDenshoku.co.,Ltd. was used to measure the yellow index in the C light source 10-degree field transmission mode.

<Evaluation of processing stability>

Pellets of the thermoplastic resin composition were charged into an injection molding machine (EC-100SX manufactured by Toshiba Machine Co., Ltd.) in which the temperature at the center of a cylinder was set to 260 °C, the mold temperature was set to 50 °C, the injection rate was set to 30 mm/sec, and the molding cycle was set to 65 seconds, and fifty 100 mm square flat plates with a thickness of 2 mm were molded. The number of plates in which silver defects occurred at this time was counted and used as an indicator of thermal processing stability.

The processing stability during thermal processing was evaluated based on the following criteria. When the number of plates in which silver occurred was 3 or less, it was evaluated as "good"; when the number was 7 or less, it was evaluated as "acceptable" (sufficient in practice); and when the number was 8 or more, it was evaluated as "poor". Based on the evaluation result, it is possible to evaluate the continuous moldability (productivity) under relatively high molding temperature conditions when the thermoplastic resin composition of the present embodiment is subjected to thermal processing.

In the thermoplastic resin composition of the present embodiment, the mass ratio of the methacrylic resin (A) and the thermoplastic polyurethane (B) in the thermoplastic resin composition can be analyzed with the following method.

First, 400 mg of the thermoplastic resin composition is dissolved in 40 mL of tetrahydrofuran. A solution phase contains the methacrylic resin (A), and a swelling layer contains the thermoplastic polyurethane (B). The solution phase is separated by filtration and reprecipitated with 350 mL of methanol, the reprecipitated products are dissolved again in 40 mL of tetrahydrofuran and reprecipitated with 350 mL of methanol, the reprecipitated products are dried under a nitrogen blow at 60 °C to obtain a sample A, and the mass is measured. Next, 10 mg of the sample A is added with 2 mg of a dimethyl sulfone standard substance as a standard substance, and the mixture is dissolved in 1 mL of $CDCl_3$-$d_1$ to obtain a sample 1 for measurement. The mass of the methacrylic resin (A) in 10 mg of the sample A is quantified by $^1$H-NMR measurement (ECA-500 manufactured by JEOL Ltd.). The mass ratio of the methacrylic resin in 10 mg of the sample A is applied to the sample A to determine the mass ratio of the methacrylic resin in the thermoplastic resin composition. At this time, the structure of the methacrylic resin (A) can also be identified.

Further, the mass of a sample B obtained by drying the swelling layer under a nitrogen blow at 60 °C is measured. Next, 10 mg of the sample B is added with 2 mg of bistrimethylsilylbenzene-d4 standard substance, the mixture is dissolved in 1 mL of deuterated dimethylformamide to prepare a sample 2 for measurement, and the mass of the thermoplastic polyurethane (B) in 10 mg of the sample B is quantified by $^1$H-NMR measurement (ECA-500 manufactured by JEOL Ltd.). The mass ratio of the thermoplastic polyurethane in 10 mg of the sample B is applied to the sample B to determine the mass ratio of the thermoplastic polyurethane (B) in the thermoplastic resin composition. At this time, the structure of the thermoplastic polyurethane (B) can also be identified.

When the detailed composition of the thermoplastic polyurethane (B) is unclear, the composition can be identified by also using IR measurement and pyrolysis GC/MS measurement. In the IR measurement, the freeze-crushed sample B is mixed with KBr and tableted, and the IR measurement is performed to identify the composition of the thermoplastic polyurethane (B). In the pyrolysis GC/MS measurement, 25.0 mg of octadecyl 3-(3,5-di-tert-butyl-4-hydroxyphenyl) propionate is collected in a 100 mL volumetric flask. Dimethylformamide is added to the marked line of the volumetric flask to prepare a 0.025 mass% octadecyl 3-(3,5-di-tert-butyl-4-hydroxyphenyl) propionate standard solution. The sample B is added with 1 mL of the standard solution, and the solution was used as a solution for pyrolysis GC/MS measurement. The pyrolysis GC/MS measurement uses a double-shot pyrolyzer, and the pyrolysis GC/MS measurement was performed with a first step of thermal extraction at 300 °C and a second step of pyrolysis at 500 °C, thereby identifying the composition of the thermoplastic polyurethane (B).

For the thermoplastic resin composition of the present embodiment, the mass ratio of the tertiary amine contained in the thermoplastic resin composition can be measured with the following method.

First, 200 mg of the thermoplastic resin composition is frozen and crushed and immersed in 10 mL of a 0.01 mol% hydrochloric acid aqueous solution for 3 hours. Next, 0.05 mL of a phenolphthalein solution is added, and neutralization titration is performed with a 0.01 mol% sodium hydroxide aqueous solution. The amount of substance of hydrochloric acid consumed was calculated from the titer, and it was taken as the content of the tertiary amine in the thermoplastic resin composition and converted into the mass ratio of the tertiary amine in the thermoplastic resin composition.

Further, the mass ratio of the tertiary amine contained in the thermoplastic polyurethane (B) can also be measured.

The sample B is frozen and crushed and immersed in 10 mL of a 0.01 mol% hydrochloric acid aqueous solution for 3 hours. Next, 0.05 mL of a phenolphthalein solution is added, and neutralization titration is performed with a 0.01 mol% sodium hydroxide aqueous solution. The amount of substance of hydrochloric acid consumed was calculated from the titer and taken as the content of the tertiary amine in the sample B, and the ratio of the content of the tertiary amine in the sample B to the content of the thermoplastic polyurethane (B) was taken as the mass ratio of the tertiary amine in the thermoplastic polyurethane (B).

[Thermoplastic resin composition]

The following describes the methacrylic resin (A) used as a structural component of the thermoplastic resin compositions in Examples and Comparative Examples described below.

<Methacrylic resin (A)>

The methacrylic resins (A-1) to (A-6) produced according to the following Production Examples A1 to A6 were used as the methacrylic resin (A).

(Production Example A1 (production of methacrylic resin (A-1)))

Ion-exchanged water: 2 kg, tricalcium phosphate: 65 g, calcium carbonate: 39 g, sodium lauryl sulfate: 0.39 g were charged into a container having a stirrer to obtain a mixed solution (a).

Next, 26 kg of ion-exchanged water was charged into a 60 L reactor and the temperature was raised to 80 °C, and the mixture (a), methyl methacrylate: 21.2 kg, methyl acrylate: 0.43 kg, lauroyl peroxide: 27 g, and n-octyl mercaptan: 62 g were added.

Next, polymerization was performed for one hour with an initial polymerization temperature being about 60 °C, then the temperature was raised to about 80 °C, and suspension polymerization was performed with the temperature kept at about 80 °C. After observing the exothermic peak, the temperature was raised to 92 °C at a rate of 1 °C/min, and aging was performed for 60 minutes to substantially complete the polymerization reaction.

Next, 20 % by mass sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles 1. The polymer fine particles 1 were pelletized by a twin-screw extruder having a diameter of 26 mm set at 240 °C to obtain a "methacrylic resin (A-1)". The obtained resin had a weight average molecular weight of 102,000 and a molecular weight distribution (Mw/Mn) of 1.85, where the structural unit MMA/MA = 98/2 % by mass, and the amount of unsaturated double bond end was 0.003 mol%.

(Production Example A2 (production of methacrylic resin (A-2)))

Ion-exchanged water: 2 kg, tricalcium phosphate: 65 g, calcium carbonate: 39 g, sodium lauryl sulfate: 0.39 g were charged into a container having a stirrer to obtain a mixed solution (b).

Next, 26 kg of ion-exchanged water was charged into a 60 L reactor and the temperature was raised to 80 °C, and the mixture (b), methyl methacrylate: 20.5 kg, ethyl acrylate: 1.32 kg, lauroyl peroxide: 33 g, and n-octyl mercaptan: 22.4 g were added.

Next, suspension polymerization was performed with the temperature kept at about 80 °C. After observing the exothermic peak, the temperature was raised to 92 °C at a rate of 1 °C/min.

Next, aging was performed for 60 minutes to substantially complete the polymerization reaction.

Next, 20 % by mass sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles 2. The polymer fine particles 2 were pelletized by a twin-screw extruder having a diameter of 26 mm set at 270 °C to obtain a "methacrylic resin (A-2)". The obtained resin had a weight average molecular weight of 218,000 and a molecular weight distribution (Mw/Mn) of 1.95, where the structural unit MMA/EA = 94/6 % by mass, and the amount of unsaturated double bond end was 0.01 mol%.

(Production Example A3 (production of methacrylic resin (A-3)))

Ion-exchanged water: 2 kg, tricalcium phosphate: 65 g, calcium carbonate: 39 g, sodium lauryl sulfate: 0.39 g were charged into a container having a stirrer to obtain a mixed solution (c).

Next, 26 kg of ion-exchanged water was charged into a 60 L reactor and the temperature was raised to 80 °C, and the mixture (c), methyl methacrylate: 21.2 kg, methyl acrylate: 0.43 kg, lauroyl peroxide: 27 g, and n-octyl mercaptan: 88 g were added.

Next, suspension polymerization was performed with the temperature kept at about 75 °C. After observing the exothermic peak, the temperature was raised to 92 °C at a rate of 1 °C/min, and aging was performed for 60 minutes to substantially complete the polymerization reaction.

Next, 20 % by mass sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles 3. The polymer fine particles 3 were pelletized by a twin-screw extruder having a diameter of 26 mm set at 230 °C to obtain a "methacrylic resin (A-3)". The obtained resin had a weight average molecular weight of 72,000 and a molecular weight distribution (Mw/Mn) of 1.83, where the structural unit MMA/MA = 98/2 % by mass, and the amount of unsaturated double bond end was 0.007 mol%.

(Production Example A4 (production of methacrylic resin (A-4)))

Methyl methacrylate: 950 g, methyl acrylate: 9.6 g, Perhexa 22 as a polymerization initiator: 0.2 g, n-octyl mercaptan: 2.8 g, and meta-xylene: 240 g were charged into a pressure-resistant polymerization reactor equipped with a stirrer. The inside of the reaction vessel was replaced with a nitrogen atmosphere, the temperature was raised to 185 °C, and the polymerization reaction was performed for 90 minutes. After collecting the contents and washing the reactor, the above operation was repeated 5 times. The collected contents were frozen and crushed and then pelletized by a degassing extruder having a diameter of 42 mm set at 230 °C to obtain a "methacrylic resin (A-4)". The obtained resin had a weight average molecular weight of 76,000 and a molecular weight distribution (Mw/Mn) of 1.97, where the structural unit MMA/MA = 99/1 % by mass, and the amount of unsaturated double bond end was 0.014 mol%.

(Production Example A5 (production of methacrylic resin (A-5)))

Ion-exchanged water: 2 kg, tricalcium phosphate: 65 g, calcium carbonate: 39 g, sodium lauryl sulfate: 0.39 g were charged into a container having a stirrer to obtain a mixed solution (c).

Next, 26 kg of ion-exchanged water was charged into a 60 L reactor and the temperature was raised to 80 °C, and the mixture (c), methyl methacrylate: 21.6 kg, lauroyl peroxide: 27 g, and n-octyl mercaptan: 62 g were added.

Next, suspension polymerization was performed with the temperature kept at about 75 °C. After observing the exothermic peak, the temperature was raised to 92 °C at a rate of 1 °C/min, and aging was performed for 60 minutes to substantially complete the polymerization reaction.

Next, 20 % by mass sulfuric acid was added to lower the temperature to 50 °C and dissolve the suspending agent, then the polymerization reaction solution was passed through a 1.68 mm-mesh sieve to remove aggregates, and the obtained bead-like polymer was washed, dehydrated and dried to obtain polymer fine particles 4. The polymer fine particles 4 were pelletized by a twin-screw extruder having a diameter of 26 mm set at 240 °C to obtain a "methacrylic resin (A-5)". The obtained resin had a weight average molecular weight of 103,000 and a molecular weight distribution (Mw/Mn) of 1.83, where the structural unit MMA = 100 % by mass, and the amount of unsaturated double bond end was 0.007 mol%.

(Production Example A6 (production of methacrylic resin (A-6)))

Using a container equipped with a stirrer, 95 parts by mass of methyl methacrylate, 5 parts by mass of maleic anhydride, 0.05 parts by mass of lauroyl peroxide, and 0.25 parts by mass of n-octyl mercaptan were added and dissolved to prepare a monomer compounding solution.

On the other hand, two glass plates with a size of 250 mm × 300 mm and a thickness of 6 mm were used, the periphery of these glass plates was sticked with a flexible gasket made of vinyl chloride, and a cell was assembled and prepared so that the distance between the two glass plates was 3.5 mm.

The monomer compounding solution was subjected to a volatilization process for 2 minutes while being stirred under a reduced pressure of 50 torr.

Next, the depressurization was terminated, the pressure was restored to normal pressure, and the glass cell was immediately filled with the monomer compounding solution.

Next, it was kept in a hot water tank whose temperature had been adjusted to 60 °C to 65 °C for 22 hours, and then it was kept in a hot air circulation oven whose temperature had been adjusted to 110 °C for 3 hours. Next, it was allowed to naturally cool to room temperature, and the glass plates were removed to obtain a sheet-shaped resin.

The sheet-shaped resin thus obtained was crushed with a coarse crusher Orient Mill VM-42D type machine manufactured by SEISHIN ENTERPRISE CO., LTD. equipped with a 10 mm-mesh net, then the crushed material was passed through a 500 μm sieve, and fine powder was removed to obtain a pulverized composition. The pulverized composition was pelletized by a twin-screw extruder having a diameter of 26 mm set at 240 °C to obtain a "methacrylic resin (A-6)". The obtained resin had a weight average molecular weight of 108,000 and a molecular weight distribution (Mw/Mn) of 1.92, where the structural unit MMA/MAH = 95.2/4.8 % by mass, and the amount of unsaturated double bond end was 0.004 mol%.

[Examples 1 to 4, 6 to 12] and [Comparative Examples 1 to 5]

Methacrylic resin (A), thermoplastic polyurethane (B), and other additives were each weighed so as to have the compounding ratio listed in Table 2, and then the materials were put into a tumbler and mixed. After the materials were sufficiently mixed, the mixed raw materials were charged into a twin-screw extruder having a diameter of 26 mm and melt-kneaded (compounded) to form strands. The strands were cooled in a water bath and then cut by a pelletizer to obtain pellets. During the compounding, a vacuum line was connected to a vent portion of the extruder to remove volatile components such as water and monomer components under the condition of -0.06 MPa. In this way, a thermoplastic resin composition was obtained. The kneading temperature of the thermoplastic resin composition was 230 °C to 260 °C. The values listed in Table 2 are the compounding amount (parts by mass) with the total mass of the methacrylic resin (A) and the thermoplastic polyurethane (B) being 100 parts by mass.

The mass ratio of the methacrylic resin (A) and the mass ratio of the thermoplastic polyurethane (B) in the thermoplastic resin compositions obtained in Examples 1 to 4, 6 to 9, 11, 12, and Comparative Examples 1 to 5 were analyzed, and it was found that the mass ratio was the same as that listed in Table 2. In the thermoplastic resin composition obtained in Example 10, the mass ratio of the methacrylic resin (A) was 88 % by mass, and the mass ratio of the thermoplastic polyurethane (B) was 12 % by mass. In the thermoplastic resin compositions obtained in Examples 1 to 4, 6 to 12, and Comparative Examples 1 to 5, the mass ratio of the tertiary amine was 0 % by mass, and the mass ratio of the tertiary amine in the thermoplastic polyurethane (B) was 0 % by mass.

[Examples 5 and 13]

A thermoplastic resin composition was obtained in the same manner as in Examples 1 to 4, 6 to 12, and Comparative Examples 1 to 5, except that a single-screw extruder having a diameter of 30 mm was used to produce pellets. The kneading temperature of the thermoplastic resin composition was 230 °C. The mass ratio of the methacrylic resin (A) and the mass ratio of the thermoplastic polyurethane (B) in the thermoplastic resin compositions obtained in Examples 5 and 13 were analyzed, and it was found that the mass ratio was the same as that listed in Table 2. In the thermoplastic resin compositions obtained in Examples 5 and 13, the mass ratio of the tertiary amine was 0 % by mass, and the mass ratio of the tertiary amine in the thermoplastic polyurethane (B) was 0 % by mass.

Table 2

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| Methacrylic resin (A) | A-1 | 90 | 80 | 65 | 80 | 50 | - | - | - | - | 87 | 80 | - | 60 | 80 | 70 | 100 | - | - |
| | A-2 | - | - | - | - | - | - | 80 | - | 65 | - | - | - | - | - | - | - | - | - |
| | A-3 | - | - | - | - | - | 80 | - | - | 15 | - | - | - | - | - | - | - | - | - |
| | A-4 | - | - | - | - | - | - | - | 70 | - | - | - | 80 | - | - | - | - | - | - |
| | A-5 | - | - | - | - | - | - | - | - | - | - | - | - | - | - | - | - | 80 | - |
| | A-6 | - | - | - | - | - | - | - | - | - | - | - | - | - | - | - | - | - | 80 |
| Thermoplastic polyurethane (B) | Polyurethane 1 | - | - | - | 20 | - | - | - | 30 | 20 | - | - | - | - | - | - | - | - | - |
| | Polyurethane 2 | 10 | 20 | 35 | - | 50 | 20 | 20 | - | - | 13 | 20 | 20 | 40 | - | - | - | 20 | 20 |
| | Polyurethane 3 | 20 | 20 | 20 | 20 | 20 | 20 | 20 | 20 | 20 | 20 | 20 | 20 | 20 | 20 | - | - | - | - |
| | Polyurethane 4 | - | - | - | - | - | - | - | - | - | - | - | - | - | - | 30 | - | - | - |
| Additive | Kane Ace M-210 | - | - | - | - | - | - | - | - | - | 8.7 | - | - | - | - | - | - | - | - |
| | Tinuvin P | 0.02 | 0.03 | 0.03 | 0.03 | 0.05 | 0.01 | 0.01 | - | 0.03 | 0.02 | 0.03 | 0.03 | 0.03 | 0.03 | 0.03 | 0.03 | 0.03 | 0.03 |
| | Stearyl alcohol | 0.1 | - | 0.2 | 0.1 | 0.05 | - | - | 01 | 0.1 | 011 | 0.1 | 0.1 | 0.1 | 0.1 | 0.1 | 0.1 | 0.1 | 01 |

<Flat plate sample>

(Injection molding)

The obtained pellets of thermoplastic resin composition were charged into an injection molding machine and molded into a 100 mm square flat plate with a thickness of 2 mm to prepare a flat plate sample for evaluation. A mold whose surface (inner surface of the mold cavity) had been polished with a No. 8000 count polisher was used as the mold.
The molding conditions for the flat plate sample for evaluation were set as follows.

Molding temperature (cylinder temperature): 220 °C to 250 °C
Mold temperature: 65 °C

Further, it is important to keep the mold temperature during injection molding higher so that the transferability of the mold surface polished with a No. 8000 count polisher could be improved. A too high mold temperature requires too long cooling time, which is not desirable in practice. A mold temperature range in which good results could be obtained is 40 °C or higher and 100 °C or lower, more preferably 50 °C or higher and 90 °C or lower, and still more preferably 60 °C or higher and 85 °C or lower, among which 65 °C was selected in this case.

<ISO dumbbell test piece>

(Injection molding)

The obtained pellets of thermoplastic resin composition were charged into an injection molding machine, and an ISO No. 1 dumbbell test piece was molded and used as a sample for evaluation. The molding conditions were based on ISOK6717-2.
As indicated in Table 3, Examples 1 to 3, 6, 7, 10, 11 and 13 produced thermoplastic resin compositions that were excellent in all of transparency, scratch resistance and toughness and also exhibited good yellowing resistance and processing stability during thermal processing. In Comparative Example 1, the injection moldability, processing stability, toughness and scratch resistance were good, but the total light transmittance was low, the haze was high, and the transparency was poor because a thermoplastic polyurethane (B) having a monomer structure derived from polyether was used. Further, the yellowing resistance during thermal processing was poor. In Comparative Example 2, the injection moldability, processing stability, toughness and scratch resistance were good, but the total light transmittance was low, the haze was high, and the transparency was poor because a thermoplastic polyurethane (B) having a monomer structure derived from aliphatic isocyanate that is not an alicyclic ring was used. Further, although the yellowing resistance during thermal processing was sufficient in practice, it was slightly inferior to that of Examples 1 to 3, 6, 7, 10, 11 and 13. In Comparative Example 3, the injection moldability, yellowing resistance and processing stability during thermal processing, and transparency were excellent, but the scratch resistance and toughness were poor. In Comparative Example 4, a vinyl monomer unit copolymerizable with a methacrylate ester monomer other than maleic acid and maleic anhydride, and a maleic acid and/or maleic anhydride monomer unit were not contained in the methacrylic resin (A) as structural units of the methacrylic resin (A). Therefore, although the transparency, scratch resistance and toughness were good, the yellowing resistance and processing stability during thermal processing were poor. Further, although the injection moldability was sufficient in practice, it was slightly inferior to that of Examples 1 to 3, 6, 7, 10, 11 and 13. In Comparative Example 5, the transparency, scratch resistance and toughness were good because the methacrylic resin (A) contained a large amount of maleic anhydride monomer unit, but the yellowing resistance and processing stability during thermal processing were poor. Further, although the injection moldability was sufficient in practice, it was slightly inferior to that of Examples 1 to 3, 6, 7, 10, 11 and 13. In Example 4, the yellowing resistance during thermal processing was sufficient in practice, but it was slightly inferior to that of Examples 1 to 3, 6, 7, 10, 11 and 13. In Example 5, the transparency and yellowing resistance were sufficient in practice, but they were slightly inferior to that of Examples 1 to 3, 6, 7, 9 to 11 and 13. In Example 8, the injection moldability, although sufficient in practice, was slightly inferior to that of Examples 1 to 3, 6, 7, 10, 11 and 13 because the yellowing during injection molding was large and silver tended to occur. Further, the yellowing resistance and processing stability during thermal processing, although sufficient in practice, were slightly inferior to that of Examples 1 to 3, 6, 7, 10, 11 and 13.
Furthermore, although the transparency was sufficient in practice, it was slightly inferior to that of Examples 1 to 3, 6, 7, 10, 11 and 13. In Example 9, the yellowing resistance during thermal processing was sufficient in practice, but it was slightly inferior to that of Examples 1 to 3, 6, 7, 10, 11 and 13. In Example 12, the injection moldability, and yellowing resistance and processing stability during thermal processing were sufficient in practice, but they were slightly inferior to that of Examples 1 to 3, 6, 7, 10, 11 and 13.

Table 3

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| Total light transmittance | % | 92 | 91 | 91 | 90 | 91 | 91 | 91 | 89 | 90 | 91 | 91 | 90 | 91 | 88 | 88 | 93 | 91 | 90 |
| | - | Especially excellent | Especially excellent | Especially excellent | Good | Especially excellent | Especially excellent | Especially excellent | Acceptable | Good | Especially excellent | Especially excellent | Good | Especially excellent | Poor | Poor | Especially excellent | Especially excellent | Good |
| Haze | % | 0.6 | 1.3 | 7.5 | 2.6 | 8.8 | 1.8 | 2.2 | 9.1 | 2.9 | 1.3 | 1.4 | 1.9 | 7.9 | 28.5 | 11.4 | 0.3 | 1.5 | 2.6 |
| | - | Especially excellent | Especially excellent | Excellent | Especially excellent | Acceptable | Especially excellent | Especially excellent | Acceptable | Especially excellent | Especially excellent | Especially excellent | Especially excellent | Excellent | Poor | Poor | Especially excellent | Especially excellent | Especially excellent |
| Scratch resistance | - | Good | Good | Good | Good | Good | Good | Good | Good | Good | Good | Good | Good | Good | Good | Good | Poor | Good | Good |
| Injection moldability | - | Good | Good | Good | Good | Good | Good | Good | Defective | Good | Good | Good | Defective | Good | Good | Good | Good | Defective | Defective |
| Toughness | - | Excellent | Excellent | Excellent | Excellent | Excellent | Excellent | Excellent | Excellent | Excellent | Excellent | Excellent | Excellent | Excellent | Excellent | Excellent | Poor | Excellent | Excellent |
| Yellowing resistance | - | Excellent | Excellent | Excellent | Acceptable | Acceptable | Good | Good | Acceptable | Acceptable | Excellent | Excellent | Acceptable | Good | Poor | Acceptable | Excellent | Poor | Poor |
| Processing stability | - | Good | Good | Good | Good | Good | Good | Good | Acceptable | Good | Good | Good | Acceptable | Good | Good | Good | Good | Poor | Poor |

EP 4 104 998 A1

**EP 4 104 998 A1**

INDUSTRIAL APPLICABILITY

With the thermoplastic resin composition of the present disclosure, it is possible to obtain a molded product with good transparency and excellent toughness and scratch resistance. Therefore, it has industrial applicability, for example, as a roofing material used for buildings, automobiles, trains or buses, a film for vinyl houses, a LCD protective film, a protective material used for indoor and outdoor lighting, signboards and meters, a member for the interior and exterior of automobiles, a vehicle lighting member, a ship lighting member, and a battery protective cover.

**Claims**

1. A thermoplastic resin composition, comprising 50 % to 99 % by mass of methacrylic resin (A) and 1 % to 50 % by mass of thermoplastic polyurethane (B), wherein the methacrylic resin (A) comprises 80.0 % to 99.9 % by mass of methacrylate ester monomer unit, 0.1 % to 20.0 % by mass of vinyl monomer unit containing a vinyl monomer copolymerizable with a methacrylate ester monomer excluding maleic acid and maleic anhydride, and 0 % to 4.0 % by mass of either or both of maleic acid and maleic anhydride monomer units, and the thermoplastic polyurethane (B) has a structural unit derived from polyester polyol and a structural unit derived from isocyanate having an alicyclic ring.

2. The thermoplastic resin composition according to claim 1, wherein the number of alicyclic rings in the structural unit derived from isocyanate having an alicyclic ring is one.

3. The thermoplastic resin composition according to claim 1 or 2, wherein a weight average molecular weight of the methacrylic resin (A) measured by gel permeation column chromatography (GPC) is 50,000 to 250,000.

4. The thermoplastic resin composition according to any one of claims 1 to 3, wherein the methacrylic resin (A) has an amount of unsaturated double bond end of 0.01 mol% or less.

5. The thermoplastic resin composition according to any one of claims 1 to 4, wherein the vinyl monomer unit containing a vinyl monomer copolymerizable with a methacrylate ester monomer excluding maleic acid and maleic anhydride is an acrylate ester monomer unit.

6. The thermoplastic resin composition according to any one of claims 1 to 5, wherein the methacrylic resin (A) contains 85 % to 99.9 % by mass of methacrylate ester monomer unit and 0.1 % to 15 % by mass of acrylate ester monomer unit.

7. The thermoplastic resin composition according to any one of claims 1 to 6, wherein a mass ratio of structural unit derived from isocyanate having one alicyclic ring is 70 % by mass or more with respect to 100 % by mass of a total mass of structural unit derived from isocyanate contained in the thermoplastic polyurethane (B).

8. A method of producing the thermoplastic resin composition according to any one of claims 1 to 7, wherein the methacrylic resin (A) and the thermoplastic polyurethane (B) are blended at a temperature in a range of 200 °C to 260 °C.

9. A molded product, comprising the thermoplastic resin composition according to any one of claims 1 to 7.

10. An injection-molded product, comprising the thermoplastic resin composition according to any one of claims 1 to 7.

11. A method of producing an injection-molded product, wherein the thermoplastic composition according to any one of claims 1 to 7 is molded at a cylinder temperature of 200 °C to 260 °C.

**INTERNATIONAL SEARCH REPORT**

International application No.

PCT/JP2021/004171

A. CLASSIFICATION OF SUBJECT MATTER
B29C 45/00(2006.01)i; C08L 33/10(2006.01)i; C08L 75/06(2006.01)i
FI: C08L33/10; C08L75/06; B29C45/00

According to International Patent Classification (IPC) or to both national classification and IPC

B. FIELDS SEARCHED

Minimum documentation searched (classification system followed by classification symbols)
B29C45/00; C08L33/10; C08L75/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2016-148033 A (JAPAN COATING RESIN CORPORATION) 18 August 2016 (2016-08-18) claims 1, 2, 5, paragraphs [0001], [0019]-[0052], [0063], [0109]-[0112], [0180]-[0208], examples 14, 15 | 1-7, 9<br>8, 10-11 |
| X<br>A | JP 2013-189559 A (DIC CORPORATION) 26 September 2013 (2013-09-26) claims 1, 2, 5, paragraphs [0087], [0102]-[0113], [0135]-[0181], example 2 | 1-7, 9<br>8, 10-11 |
| X<br>A | JP 2013-035895 A (ADEKA CORPORATION) 21 February 2013 (2013-02-21) claims 1, 3, 5, paragraphs [0055], [0061], [0085]-[0110], production example PAU-1, comparative production examples PAU-4, PAU-6, PAU-7 | 1-7, 9<br>8, 10-11 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 April 2021 (07.04.2021) | Date of mailing of the international search report<br>20 April 2021 (20.04.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2021/004171 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 10-265735 A (NIPPON POLYURETHANE INDUSTRY CO., LTD.) 06 October 1998 (1998-10-06) claim 1, paragraphs [0050]-[0069], comparative example 5 | 1-2, 4-7, 9<br>3, 8, 10-11 |
| A | JP 2002-356658 A (NIPPON CARBIDE INDUSTRIES CO., INC.) 13 December 2002 (2002-12-13) claim 1, paragraphs [0057]-[0074] | 1-11 |

Form PCT/ISA/210 (continuation of second sheet) (January 2015)

INTERNATIONAL SEARCH REPORT
Information on patent family members

International application No.

PCT/JP2021/004171

| Patent Documents referred in the Report | Publication Date | Patent Family | Publication Date |
|---|---|---|---|
| JP 2016-148033 A | 18 Aug. 2016 | (Family: none) | |
| JP 2013-189559 A | 26 Sep. 2013 | (Family: none) | |
| JP 2013-035895 A | 21 Feb. 2013 | (Family: none) | |
| JP 10-265735 A | 06 Oct. 1998 | (Family: none) | |
| JP 2002-356658 A | 13 Dec. 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003183471 A
- WO 2007057242 A

- JP 2015532345 A

**Non-patent literature cited in the description**

- *Journal of The Adhesion Society of Japan,* 2004, vol. 40 (6